# EUROPÄISCHE PATENTSCHRIFT

(11) **EP 3 222 555 B1**
(45) Veröffentlichungstag und Bekanntmachung des Hinweises auf die Patenterteilung: **08.01.2020**
(21) Anmeldenummer: 16161748.5
(22) Anmeldetag: 22.03.2016
(51) Int. Cl.: B65D 81/32, B65D 85/804

(54) **EXTRAKTIONSKAPSEL**
EXTRACTION CAPSULE
CAPSULE D'EXTRACTION

(43) Veröffentlichungstag der Anmeldung: 27.09.2017
(73) Patentinhaber: Mühlemann IP GmbH, 8260 Stein am Rhein (CH)
(72) Erfinder: MÜHLEMANN, Rolf, 8255 Schlattingen (CH)
(74) Vertreter: Manske, Jörg

(56) Entgegenhaltungen:
- EP-A1- 2 210 826
- WO-A1-2011/159162
- WO-A1-2014/061045
- WO-A2-2013/167789

## Beschreibung

Die vorliegende Erfindung betrifft eine Extraktionskapsel, die eine Substanz enthält für die Zubereitung eines flüssigen Lebensmittels, mit einem extraktionsseitigen Boden mit einer Auslauföffnung und einer an den Boden anschliessenden Mantelwand mit einem endständigen, radial nach aussen gerichteten Flansch und mit einer injektionsseitigen Füllöffnung, die mit einer Versiegelungsfolie verschlossen ist.

Solche Extraktionskapseln, die bevorzugterweise zur Fertigung von Kaffee oder Tee, aber auch von Suppen verwendet werden, sind in einer grossen Zahl heute auf dem Markt erhältlich.

Solche Kapseln werden in entsprechenden Zubereitungsmaschinen eingelegt, und zwar so, dass die injektionsseitige Füllöffnung, die mit einer Versiegelungsfolie verschlossen ist, durch ein oder mehrere Injektionselemente penetriert wird und in der Extraktionskapsel ein Innendruck aufgebaut wird. Hierzu wird die Extraktionskapsel in einer sogenannten Brühkammer in der Getränkezubereitungsmaschine eingelegt und in dieser Brühkammer formschlüssig und kraftschlüssig während des Extraktionsprozesses gehalten. Bei der meistverbreiteten Version solcher Kapseln sind im extraktionsseitigen Boden Mittel vorgesehen, die die in der Extraktionskapsel vorhandene Substanz gegen ein Herausschwemmen halten und in Durchströmungsrichtung nachfolgend eine Versiegelungsfolie angebracht ist, die durch den Aufbau des Innendrucks zerstört wird, so dass die durch die Substanzen bereicherte Flüssigkeit durch die im extraktionsseitigen Boden vorhandene Auslauföffnung aufbereitet nach aussen strömen kann. Eine solche Lösung ist beispielsweise aus der WO 2014/033341 bekannt.

Alternativ besteht eine Lösung, bei der die den Kapselraum extraktionsseitig verschliessende Versiegelungsfolie durch eine Berstscheibe ersetzt worden ist. Die Funktionsweise bleibt aber bei dieser alternativen Ausführung absolut identisch. Das entsprechend auftretende Problem ist selbstverständlich bei beiden Systemen dasselbe.

Dieses Problem besteht nämlich darin, dass der aufzubauende Druck einerseits von der Qualität der injektionsseitigen Folie abhängt, und andererseits von der absolut gleichförmigen Qualität der unter Druck zu zerstörenden Versiegelungsfolie bzw. von den zu platzenden Nahtstellen einer Berstplatte. Dies führt oft dazu, dass die entsprechende Berstfolie oder Berstplatte sich nicht im gewünschten Umfang öffnet und daher die Qualität des Extraktionsgetränks stark variieren kann. Ist die Pumpe der Getränkeaufbereitungsmaschine zeitgesteuert, so erhält man dann beispielsweise bei einem Kaffeegetränk ein kleineres Volumen, dessen Geschmack aber wesentlich intensiver ist als bei einem Getränk, bei dem die Berstfolie oder Berstplatte sich vollständig und korrekt geöffnet hat. Ist die Pumpe der Getränkeaufbereitungsmaschine volumengesteuert, so wird die Menge des Getränkes dieselbe sein, aber auch hier durch die wesentlich längere Extraktionszeit wird auch in diesem Falle das zubereitete Getränk geschmacksintensiver sein, insbesondere, wenn es sich hierbei um Kaffee oder Tee handelt.

WO2011159162 A1 beschreibt eine Kapsel mit einem verschiebbaren Boden, welcher eine in der Kapsel befestigte Siegelfolie perforieren kann. Der verschiebbare Boden ist über Sollbruchstellen an einem auf die Mantelwand aufgesetzten Ring befestigt.

WO2014061045 A1 beschreibt eine Kapsel mit einem flexiblen Boden, welcher über zwei Gelenkstellen in Richtung Versiegelungsfolie bewegbar ist. Bei der Lösung ist die maximale Auslenkung jedoch stark begrenzt und die Gelenkstellen halten einer Überdehnung nicht stand.

Es ist daher die Aufgabe der vorliegenden Erfindung, eine Extraktionskapsel anzubieten, bei der das Öffnen der Versiegelungsfolie nicht mehr vom aufgebauten Druck in der Extraktionskapsel abhängig ist und somit eine erheblich sicherere und gleichartige Öffnung der extraktionsseitig angebrachten Versiegelungsfolie erfolgt.

Es ist eine weitere Aufgabe der vorliegenden Erfindung, eine Extraktionskapsel anzubieten, die mit oder ohne eine darin einbringbare Einlegekapsel gestaltet sein kann.

Es ist eine weitere Aufgabe der vorliegenden Erfindung, eine Extraktionskapsel anzubieten, die einstückig aus Kunststoff gespritzt werden kann und die oberhalb und distanziert vom extraktionsseitigen Boden mit einer Konsole versehen ist, auf die die zu perforierende extraktionsseitige Versiegelungsfolie aufliegt.

Diese vielseitigen Aufgaben werden gelöst durch eine Extraktionskapsel der eingangs genannte Art, die sich auszeichnet durch die Merkmale des kennzeichnenden Teiles des Patentanspruches 1. Die weiteren, oben erwähnten Aufgaben, sowie auch noch zusätzliche Aufgaben, werden durch die in den abhängigen Ansprüchen definierten Möglichkeiten realisiert.

Die erfindungsgemässe Lösung erlaubt es auch, in der Extraktionskapsel eine Einlegekapsel unterzubringen, und den Zwischenraum zwischen der Extraktionskapsel und der Einlegekapsel zu nutzen, wobei dieser Raum beispielsweise mit einer anderen Substanz gefüllt sein kann als die Substanz in der Einlegekapsel und wobei ferner durch Injektion in diesen Raum zwischen der Extraktionskapsel und der Einlegekapsel Flüssigkeit injizierbar ist, die um die Einlegekapsel herum fliessen kann und sich mit der aus der Kapsel strömenden Flüssigkeit im Bereich oberhalb des extraktionsseitige Bodens sich vermischen kann. Ein solche Extraktionskapsel mit Einlegekapsel kann auch als eigenständige Erfindung unabhängig von den voran beschriebenen Perforationsmittel betrachtet werden. Perforationsmittel können beispielsweise in der Zubereitungsmaschine angeordnet sein.

In der nachfolgenden Beschreibung sind verschiedene, in den anliegenden Figuren gezeigte und in den abhängigen Ansprüchen beanspruchte Ausführungsvarianten detailliert beschrieben und deren Wirkungsweise und Bedeutung dargelegt.

Die beigefügten Zeichnungen zeigen:
- Fig. 1: einen Diametralschnitt durch eine erste Ausführungsform der erfindungsgemässen Extraktionskapsel, die mit Ausnahme der beiden anzubringenden Versiegelungsfolien vollständig einstückig aus Kunststoff spritzgusstechnisch gefertigt werden kann;
- Fig. 2: stellt eine Ausführungsform dar, bei der der Exktraktionsbecher mit einer Sperrschicht ausgestaltet fertigbar ist, wobei auf dem extraktionsseitigen Boden eine Perforationsplatte aufliegt;
- Fig. 3: zeigt eine entsprechende Lösung, wie jene der Fig. 1 mit anders gestalteter Konsole und einer auf der Konsole aufliegenden Einlegekapsel;
- Fig. 4: zeigt eine ähnliche Lösung wie die Fig. 3, wobei hier jedoch wie bei der Variante nach Fig. 2 auf dem extraktionsseitigen Boden eine gesonderte Perforationsplatte aufliegt;
- Fig. 5: zeigt wieder einen Extraktionsbecher mit einer Konsole, wie in den Fig. 1 und 2 gezeigt, auf der nun eine Einlegekapsel mit verbreitertem Flansch aufliegt und einer Perforationsplatte, die sich auf dem extraktionsseitigen Boden abstützt;
- Fig. 6: zeigt eine entsprechende Alternative, wobei die Perforationsplatte getrennt, aber irreversibel formschlüssig mit Mitteln am extraktionsseitigen Boden gehalten ist.

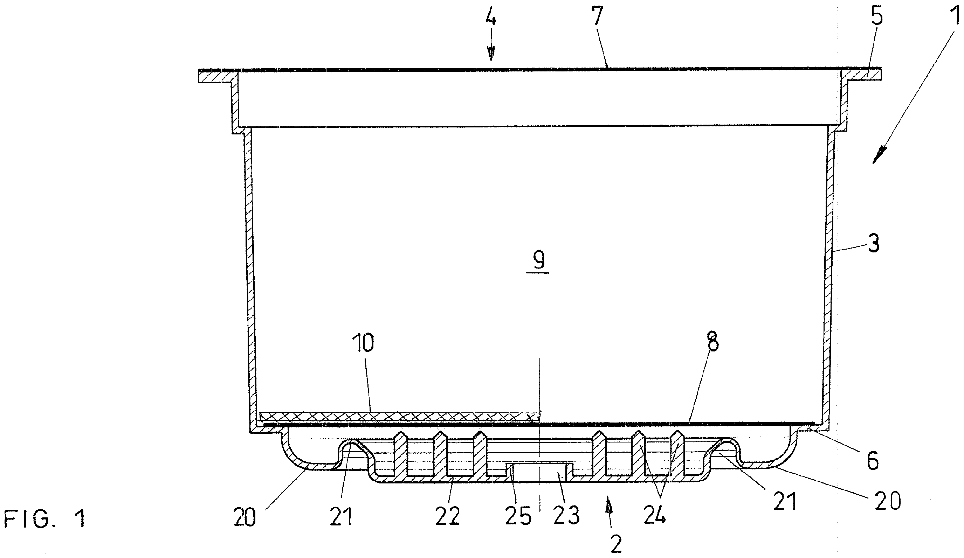

In der Fig. 1 ist eine besonders einfache Ausgestaltungsform der erfindungsgemässen Extraktionskapsel 1 dargestellt. Eine solche Extraktionskapsel weist einen extraktionsseitigen Boden 2 auf, an dem einstückig angeformt die Mantelwand 3 folgt, die konisch oder quasi zylindrisch gestaltet ist und in einem peripher nach aussen gerichteten Flansch 5 endet. Da die Extraktionskapsel aus thermoplastischem Kunststoff spritzgusstechnisch gefertigt ist, muss die Mantelwand 3 immer konisch nach aussen geneigt verlaufend gestaltet sein. Dies ist gezwungenermassen so, um damit ein Entformen der Kapsel aus der Spritzgussform überhaupt zu ermöglichen. Obwohl in der Zeichnung die Mantelwand 3 zylindrisch erscheint, ist dieser Anzugswinkel natürlich realisiert und entsprechend wurde hier oben die Mantelwand als quasi zylindrisch beschrieben. Der Anzugswinkel in der Spritzgussform kann natürlich praktisch beliebig sein, ein minimaler Anzugswinkel liegt aber meist unter 1 % abweichender Neigung von der Vertikalen.

Die Extraktionskapsel 1 hat somit ihren grössten Innendurchmesser im Bereich der Einfüllöffnung 4. Diese Einfüllöffnung 4 ist im gefüllten Zustand der Extraktionskapsel mit einer Versiegelungsfolie 7 versehen. Diese Versiegelungsfolie 7, die die Einfüllöffnung 4 verschliesst, ist auf dem Flansch 5 aufgeschweisst. Am bodenseitigen Ende der Mantelwand 3 ist eine Konsole 6 geformt. Diese verläuft parallel zum Flansch 5. Auf dieser Konsole 6 ist eine Versiegelungsfolie 8 aufgeschweisst, die den Nutzraum 9 der Extraktionskapsel 1 extraktionsseitig verschliesst. Der extraktionsseitige Boden 2 weist zwei verschiedene Bereiche auf, nämlich einen äusseren, peripheren Randbereich 20, der lageunveränderlich ist, einen zentrischen, eine Bodenplatte 22 bildenden lageveränderbaren Bereich. Zwischen diesen beiden Bereichen verläuft eine umlaufende Gelenkstelle 21. Die Gelenkstelle ist ausgebildet als ringförmige und U-förmige Rinne mit gegenüber der Bodenplatte 22 und dem Randbereich 20 verdünnter Wand. Die Bodenplatte 22, die lageveränderlich ist, ist vor der Benutzung in einer ersten Lage. In dieser ersten Lage liegt die Bodenplatte 22 in einer Ebene, die weiter von der Ebene, in der die Versiegelungsfolie 7 an der Füllöffnung 4 anliegt, entfernt ist. In dieser ersten Lage, die in der Fig. 1 dargestellt ist, liegt die Bodenplatte 22 auch in einer tieferen Lage als der periphere, lagenunveränderliche Randbereich 20. In der nicht dargestellten zweiten Lage liegt die Bodenplatte 22 des extraktionsseitigen Bodens 2 in derselben Ebene, in der der periphere, lageunveränderliche Randbereich 20 liegt.

Die erfindungsgemässe Extraktionskapsel 1 ist dazu bestimmt, in einem Extraktionsraum einer Zubereitungsmaschine Aufnahme zu finden. Die Höhe dieses Aufnahmeraumes entspricht der Distanz zwischen dem umlaufenden Flansch 5 der Extraktionskapsel und dem lageunveränderlichen, peripheren Randbereich 20 des extraktionsseitigen Bodens 2. Wird die Extraktionskapsel 1 nun in den Aufnahmeraum der Zubereitungsmaschine eingelegt, so überragt sie dessen Rand anfänglich. Beim Schliessen dieses Extraktionsraumes wird nun die Bodenplatte 2, die auf dem Boden des Extraktionsraumes aufliegt, um die Gelenkstelle 21 in Richtung der Einfüllöffnung 4 verschoben, bis die Bodenplatte 2 in derselben Ebene verläuft, wie der lagenunveränderliche, periphere Randbereich 20. Bei dieser Lageveränderung durchdringen nun die auf der Bodenplatte 22 angeformten Perforationsmittel 24 die extraktionsseitige Versiegelungsfolie 8, die auf der Konsole 6 aufgeschweisst den Nutzraum 9 der Extraktionskapsel 1 verschliesst. Durch die die Füllöffnung 4 verschliessende Versiegelungsfolie 7 dringen nun Injektionsnadeln der Zubereitungsmaschine durch diese Versiegelungsfolie 7 und injizieren ein Extraktionsmedium in den Nutzraum 9. Dieses in den Nutzraum 9 unter Druck einströmende Extraktionsmedium durchströmt den Nutzraum 9 und das darin befindliche Nutzmedium. Dieses Nutzmedium kann, wie bereits erwähnt, Kaffee oder Tee sein, aber selbstverständlich auch irgend ein anderes, volllöslich pulverförmiges oder dickflüssiges Produkt sein, welches dann in den Bereich oberhalb der Bodenplatte 15 gelangt und von dort über die Auslauföffnung 23 nach aussen in einen Auffangbecher oder -teller. Ist das Nutzmedium ein nichtlösliches oder nur teillösliches Produkt, wie beispielsweise Kaffee oder Tee, so müssen bekannte Mittel vorhanden sein im Nutzraum 9 der Extraktionskapsel 1, die diese Produkte zurückhalten. In der Fig. 1 ist ein solches bekanntes Mittel in der linken Hälfte der Extraktionskapsel dargestellt. Dieses Mittel ist hier eine Siebmatte 10. Selbstverständlich muss diese Siebmatte sich über die gesamte extraktionsseitige Versiegelungsfolie 8 erstrecken. Statt einer Siebmatte 10 kann auch eine Siebplatte vorgesehen sein. In dieser bevorzugten Ausführungsform gemäss der Fig. 1 ist die gesamte Extraktionskapsel 1 inklusive den Perforationsmitteln 24 einstückig gestaltet. Lediglich die Siebmatte 10 und die Versiegelungsfolien 7 und 8 werden nachträglich angebracht.

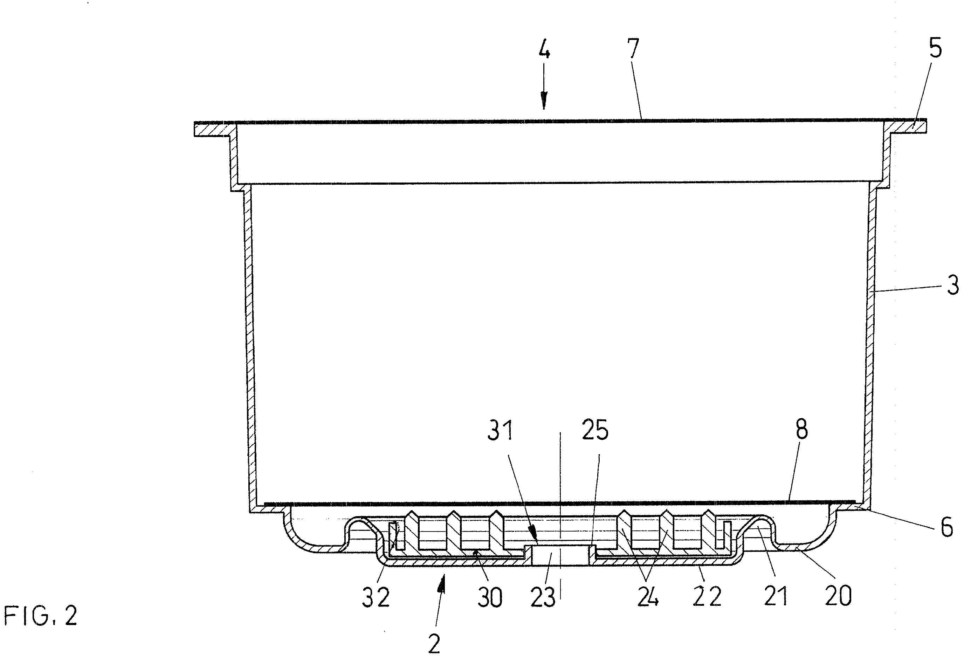

Die in Fig. 2 dargestellte Lösung weicht von dieser bevorzugten Lösung nach der Fig. 1 lediglich dadurch ab, dass die Perforationsmittel nicht direkt auf der Bodenplatte 22 angeformt sind, sondern hier ist auf der Bodenplatte 22 eine Perforationsplatte 30 aufgelegt, und die Perforationsmittel 24 sind auf dieser Perforationsplatte 30 angebracht. Die Perforationsplatte 30 besitzt einen zentrischen Durchdurch 31, der sich an einem nach innen ragenden Rand 25 der Auslauföffnung 23 hält.

Die Wirkungsweise ist hier selbstverständlich wieder gleich, wie dies anhand der Fig. 1 beschrieben worden ist. Die Perforationsplatte 30 besitzt hier aber zusätzlich einen peripheren Anschlagsrand 32 im äussersten Bereich der Perforationsplatte. Befindet sich die Bodenplatte 22 in der zuvor beschriebenen zweiten Lage, so liegt nun diese periphere Anschlagswand 22 straff an der extraktionsseitigen Versiegelungsfolie 8 an. Damit wird sichergestellt, dass das durch die Perforationsöffnungen ausströmende Extraktionsmedium nicht in den praktisch eine umlaufende Rinne bildenden Bereich des lageunveränderlichen peripheren Randbereiches 20 gelangt, sondern nur durch den zentrischen Durchbruch 31 in der Perforationsplatte 30 ausströmend auf die Bodenplatte 22 und von dort durch die Auslauföffnung 23 nach aussen gelangt.

Die beiden bisher beschriebenen Ausführungen gemäss den Fig. 1 und 2 gehen von Lösungen aus, bei denen die Extraktionskapsel 1 einen Nutzraum 9 aufweist, in den ein Nutzmedium direkt einfüllbar ist. Es kann aber durchaus sinnvoll sein, in diesen Nutzraum 9 das Nutzmedium nicht direkt, sondern indirekt einzubringen, mittels einer Einlegekapsel 40. Diese Einlegekapsel 40 wird in die Extraktionskapsel durch die einfüllseitige Öffnung 4 eingesetzt. Die Einlegekapsel 40 besitzt einen injektionsseitigen Boden 41, der im vollständig eingesetzten Zustand mit der Ebene, welche der umlaufende Flansch 5 der Extraktionskapsel 1 definiert, fluchtet. Dies erlaubt es, mit der die Füllöffnung 4 verschliessenden Versiegelungsfolie 7 die Einlegekapsel 40 in der entsprechend korrekten Lage zu fixieren. Entsprechend wird man die Versiegelungsfolie 7 nicht nur am Flansch 5 anschweissen, sondern zumindestens auch im Randbereich des injektionsseiten Bodens 41.

Bei der hier beschriebenen Version sind nun an der Mantelwand 3 sowie an der Konsole 6 radial ausgerichtete Stützrippen 50 angeformt, die sich bis auf den lageunveränderlichen, peripheren Randbereich 20 hinunter erstrecken. In diesen radial ausgerichteten Stützrippen 50 ist auf der Höhe der Konsole 5 in jeder Rippe jeweils eine Stufe 51 eingeformt. Diese eingeformten Stufen 51 verlaufen auf derselben Höhe wie die Oberkante der Konsole 6. Die Einlegekapsel 40 ruht nun auf diesen eingeformten Stufen 51. Jener Teil der Stützrippen 50, der von der Konsole 6 abwärts in den peripheren Randbereich 20 sich erstreckt, bildet den Versteifungsteil 52 dieser Stützrippen 50. Gleichzeitig bilden sich zwischen den Stützrippen 50 und der Mantelwand 3 einerseits, sowie zwischen der Stützrippe und dem lageunveränderlichen, peripheren Randbereich, Durchströmöffnungen 53, auf deren Bedeutung nachfolgend noch eingegangen wird. Die Funktion der erfindungsgemässen Extraktionskapsel 1 in bezug auf die Perforationswirkung ist insofern dieselbe, als hierbei ebenso die Bodenplatte 22 von einer ersten Ausgangslage in eine zweite Endlage bewegt wird, und dabei die Perforationsmittel 24 eine Versiegelungsfolie extraktionsseitig durchstossen. Der Unterschied besteht allerdings darin, dass hier nicht eine gesonderte extraktionsseitige Versiegelungsfolie auf der Konsole 6 durchstossen wird, sondern statt dessen eine Versiegelungsfolie 44, welche die extraktionsseitige Einfüllöffnung 44 der Einlegekapsel 40 verschliesst, durchstösst.

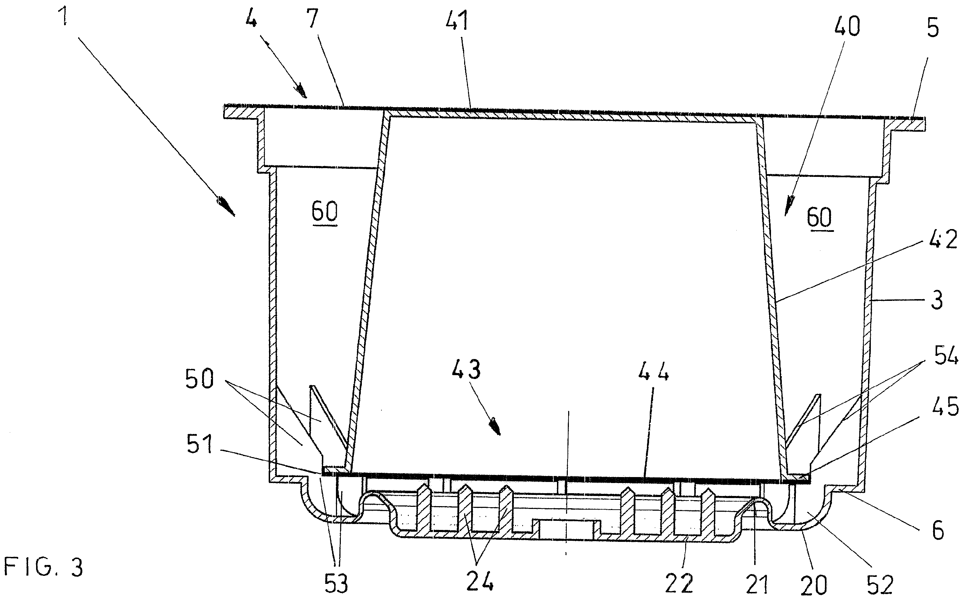

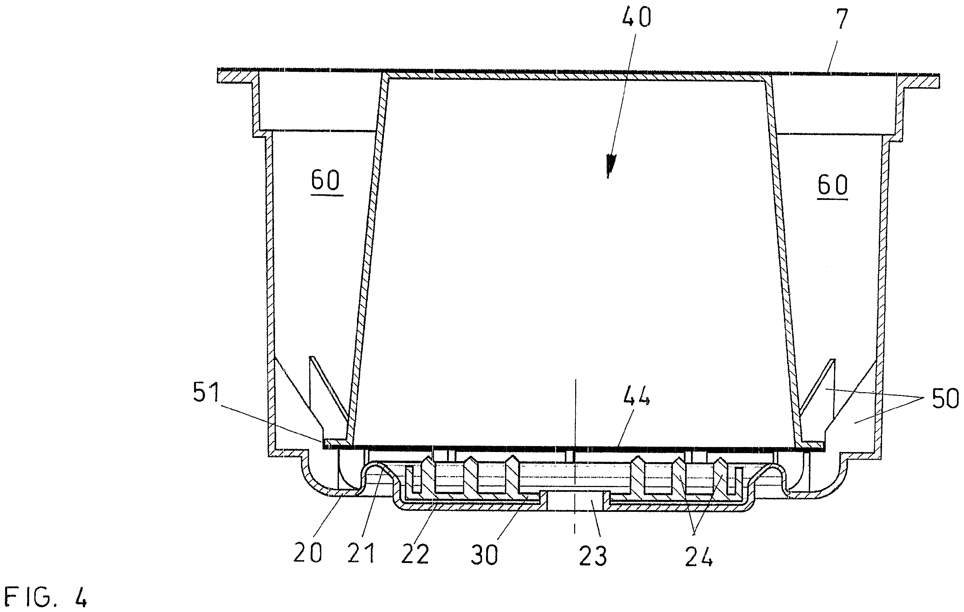

Auch die Version gemäss Fig. 4 entspricht der Lösung gemäss Fig. 3 vollständig, mit Ausnahme davon, dass hier wie in der Variante gemäss der Fig. 2 die Perforationsmittel 24 nicht direkt auf der Bodenplatte angegossen sind, sondern dass hier auf der Bodenplatte 22 eine Perforationsplatte 30 angeordnet ist. Ansonsten wird auf die Beschreibung bezüglich der Fig. 2 verwiesen.

Zwischen der Einlegekapsel 40 und der Extraktionskapsel 1 verbleibt zwischen deren beiden Mantelwänden 3 und 42 ein umlaufender, ringförmiger Trog 60. Dieser ringförmige Trog 60 kann mit einem weiteren Nutzmedium gefüllt sein und durch weitere Injektionsnadeln der Zubereitungsmaschine, die wiederum durch die Versiegelungsfolie 7 eindringen, mit einer flüssigen Phase, die hier als Mischmedium bezeichnet wird, ausgeschwemmt werden. Die Nutzmedien in der Einlegekapsel 40 und im ringförmigen Trog 60 können dabei praktisch einander ergänzend sein. Da in der Ausführungsform gemäss der Fig. 4 sowohl die Einlegekapsel 40 wie auch die Extraktionskapsel 1 einstückig und mit einer Sperrschicht versehen gefertigt sein können, werden sich die beiden Nutzmedien auch während einer längeren Lagerzeit nicht gegenseitig beeinflussen und sind beide vollständig hermetisch gelagert. Hierbei sei noch darauf hingewiesen, dass die Auslauföffnung 23 in diesem Falle sinnvollerweise mit einer Berstfolie oder mit einer abreissbaren Versiegelungsfolie verschlossen sein kann.

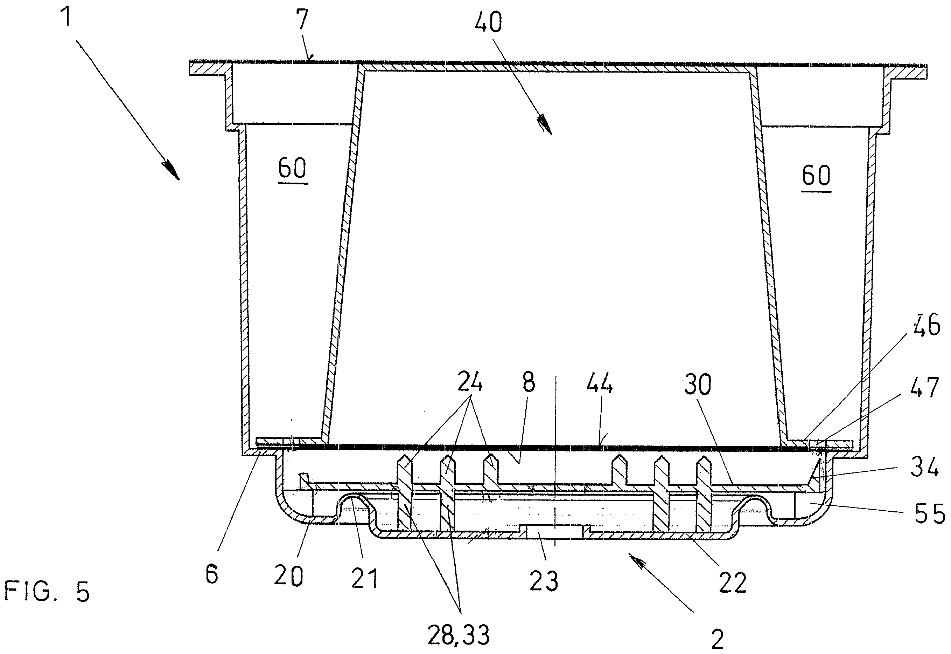

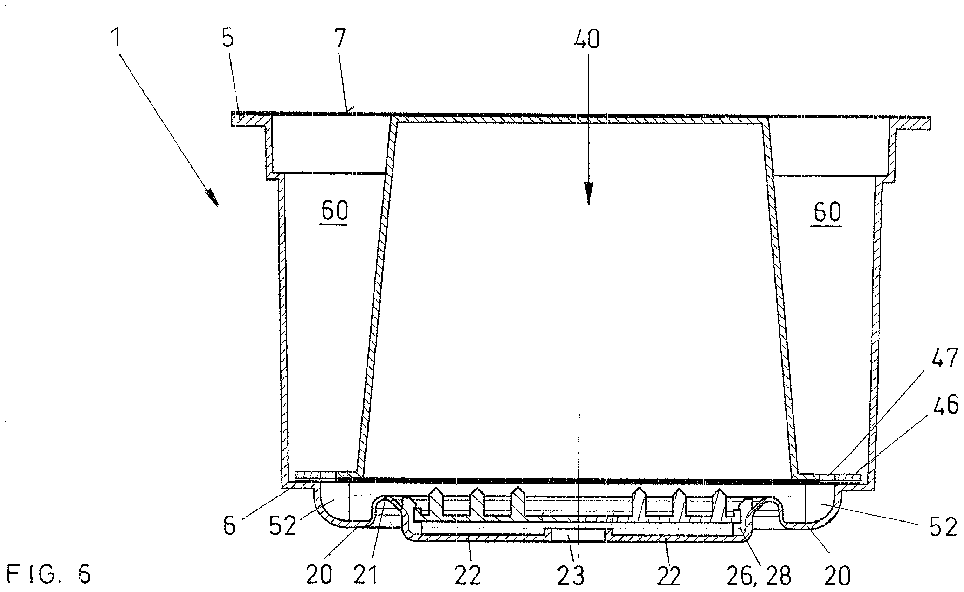

In den Fig. 5 und 6 sind nochmals zwei Varianten der erfindungsgemässen Extraktionskapsel 1 dargestellt, die beide eine Einlegekapsel 40 enthalten. Die Einlegekapsel 40 weist bei diesen beiden Ausführungsformen einen breiteren Flansch 46 auf. Dieser verbreiterte Flansch 46 erlaubt es, in den Flansch selber Extraktionsdurchbrüche 47 vorzusehen. Zudem ist hier auf der Konsole 6, wie zuvor bei den Ausführungsformen gemäss den Fig. 1 und 2, eine extraktionsseitige Versiegelungsfolie auf der Konsole 6 aufgeschweisst. Die Einlegekapsel 40 besitzt ebenfalls eine die extraktionsseitige Einfüllöffnung 43 verschliessende Versiegelungsfolie 44, doch diese Versiegelungsfolie 44 erstreckt sich nicht über die Extraktionsdurchbrüche 47 in den verbreiterten Flansch 46. Die Extraktionsdurchbrüche 47 werden somit nur durch die extraktionsseitige Versiegelungsfolie 8 auf der Konsole 6 geschlossen. In diesem Falle wird der aufbauende Druck im ringförmigen Trog 60 bereits genügen, um diese Folie im Bereich der Extraktionsdurchbrüche 47 zu zerstören. Dies nicht zuletzt deshalb, weil die hier zur Anwendung gelangende extraktionsseitige Versiegelungsfolie 8 als Zweitfolie wesentlich dünner sein kann als die Versiegelungsfolie 44 der sehr viel grösseren Fläche der extraktionsseitigen Einfüllöffnung 43 der Einlegekapsel 40, die diese Folie 44 verschliessen muss.

Die hier wiederum vorhandene Perforationsplatte 30 unterscheidet sich gegenüber der zuvor beschriebenen Extraktionsplatte dadurch, dass diese auf verkürzte Radialrippen 55 aufliegt, wobei diese verkürzten Radialrippen als Versteifungen des lageunveränderlichen, peripheren Randbereiches 20 dienen. Da nun die Perforationsplatte 30 nicht mehr direkt auf der Bodenplatte 22 aufliegt, sind nun an der Perforationsplatte 30 auf deren Unterseite Stützmittel 28 angeformt, die hier praktisch fluchtend unter den Perforationsmitteln 24 angeordnet sind. Bei dieser Lösung ist es zusätzlich möglich, am peripheren Rand der Perforierplatte 30 periphere Stechdornen 34 anzuordnen, die auf die Extraktionsdurchbrüche 47 ausgerichtet sind. Dies verlangt dann allerdings, dass auf der Innenseite der Mantelwand 3 sowie am äusseren Bereich des verbreiterten Flanschs 46 entsprechende Orientierungsmittel vorgesehen sind, die eine exakte Ausrichtung der Einlegekapsel 40 in der Extraktionskapsel 1 bewirken, und ebenso muss dies auf die Perforierplatte 30 in diesem Falle zutreffen. Da diese Lösung entsprechend aufwändig in der Montage ist, wird die Lösung, welche statt dessen eine verdünnte extraktionsseitige Versiegelungsfolie 8 auf der Konsole 6 aufweist, bevorzugt. In der Fig. 5 ist links die einfache Ausführungsform und rechts die Ausführungsform mit Stechdornen 34 gezeigt.

In der Fig. 6 ist nun noch eine letzte Ausführungsform dargestellt, die sich bezüglich der Ausführung gemäss der Fig. 5 lediglich dadurch unterscheidet, dass die Perforationsplatte 30 hier nicht über Stützmittel 28 mit der Bodenplatte 22 verbunden ist, sondern, dass auf der Bodenplatte 22 einige im Umfang verteilte Haltemittel 26 angeformt sind, die im Bereich der umliegenden Gelenkstelle 21 seitlich an diese anlehnen, aber damit nicht verbunden sind, um die Gelenkstelle nicht zu versteifen. Die Haltemittel 26 weisen eine Arretierungsnase 27 auf, die je nach Form und Grösse die Perforationsplatte 30 reversibel oder irreversibel hält. Die rippenartigen Haltemittel 26, die radial ausgerichtet in der Peripherie der Bodenplatte 22 angeordnet sind, belassen zwischen der Gelenkstelle 21 und der Perforationsplatte 30 einen genügenden Zwischenraum, sodass ein Mischmedium, welches in den ringförmigen Trog 60 injiziert wird, über die Gelenkstelle 21 hinweg zwischen dieser und der Perforationsplatte 30 in den Zwischenraum zwischen der Bodenplatte 22 und der Perforationsplatte 30 gelangen kann. Dies erlaubt praktisch eine vollständig getrennte Zuführung einerseits des Mischmediums durch den Trog 60 und andererseits des Extraktionsmediums durch die Einlegekapsel 40 entweder praktisch getrennt zur Auslassöffnung 23 im Boden zu führen, falls in der Perforationsplatte 30 ebenfalls ein zentrischer Auslauf 35 eingeformt ist. Ist jedoch ein zentrischer Auslauf 35 in der Perforationsplatte 30 nicht vorhanden, so wird gezwungenermassen das Extraktionsmedium aus der Einlegekapsel 40 ebenfalls durch den ringförmigen Spalt, welcher durch die Haltemittel 26 definiert ist, hinaus gezwungen, so dass in diesem Bereich die beiden Medien ideal vermischt werden.

Trotz der Vielfalt der verschiedenen möglichen Ausführungsformen des Erfindungsgegenstandes, beruhen alle Lösungen darauf, dass die relative Beweglichkeit der Bodenplatte 22 dank der ringförmigen Gelenkstelle 21 von einer ersten Lage, in der die Bodenplatte 22 unterhalb dem lageunveränderlichen, peripheren Randbereich 20 liegt, in eine zweite Lage auf dieselbe Höhe bewegbar ist, wie der lageunveränderliche, periphere Randbereich 20. Diese Lösung ist dabei völlig unabhängig von einem aufgebauten Druck im Nutzraum 9 der Extraktionskapsel 1 oder eines aufgebauten Druckes im Innenraum einer Einlegekapsel 40 und der damit verbundenen druckbedingten Verformung der extraktionsseitigen Versiegelungsfolie, die auf der Konsole 6 angebracht ist, noch von der Verformung der extraktionsseitig auf der Einfüllöffnung 43 angebrachten Versiegelungsfolie 44 der Einlegekapsel 40. Die Perforation erfolgt lediglich durch die gezwungenermassen vorhandenen Raumverhältnisse in einer Extraktionskammer einer Aufbereitungsmaschine, wobei die Verschiebung der Bodenplatte 22 hier rein mechanisch erfolgt durch die Kräfte, die beim Schliessen der Brühkammer anliegen.

Die vorliegende Erfindung erlaubt es aber auch, wesentlich einfachere Aufbereitungsmaschinen zu verwenden, weil die Verschiebung der Bodenplatte auch durch den Benutzer durch Daumendruck allein realisierbar ist. Somit kann die Versiegelungsfolie 44 oder die Versiegelungsfolie 8 bzw. beide Versiegelungsfolien, die extraktionsseitig vorhanden sein können, bereits im perforierten Zustand in die Maschine gelangen. Damit wird ein geringerer Injektionsdruck benötigt, und die entsprechenden Verschliessmittel der Brühkammer können ebenfalls vereinfacht ausgestaltet sein.

### Bezugszeichenliste:

- 1: Extraktionskapsel
- 2: extraktionsseitger Boden
- 3: Mantelwand
- 4: Einfüllöffnung
- 5: Flansch
- 6: Konsole
- 7: Füllöffnung verschliessende Versiegelungsfolie
- 8: Extraktionsseitige Versiegelungsfolie auf Konsole
- 9: Nutzraum der Extraktionskapsel
- 10: Siebmatte oder Siebplatte
- 20: lageunveränderlicher, peripherer Randbereich
- 21: umlaufende Gelenkstelle
- 22: Bodenplatte
- 23: Auslauföffnung
- 24: Perforationsmittel
- 25: nach innen ragender Rand der Auslauföffnung
- 26: Haltemittel für Perforationsplatte 30
- 27: Arretiernase
- 28: Stützmittel
- 30: Perforationsplatte
- 31: zentrischer Durchbruch in der Perforationsplatte
- 32: peripherer Anschlagsrand
- 33: Stützpfosten
- 34: periphere Stechdornen
- 40: Einlagekapsel
- 41: injektionsseitiger Boden
- 42: Mantelwand der Einlegekapsel
- 43: Extraktionsseitige Einfüllöffnung
- 44: Versiegelungsfolie der extraktionsseitigen Einfüllöffnung
- 45: extraktionsseitiger Flansch
- 46: verbreiteter Flansch
- 47: Extraktionsdurchbrüche
- 50: Stützrippen, radial gerichtet
- 51: eingeformte Stufe
- 52: Versteifungsteil der Stützrippen
- 53: Durchströmöffnungen
- 54: Zentrierbereich der Stützrippen
- 55: verkürzte Radialrippen
- 60: ringförmiger Trog

## Patentansprüche

1. Extraktionskapsel (1), die eine Substanz enthält für die Zubereitung eines flüssigen Lebensmittels, mit einem extraktionsseitigen Boden (2) mit einer Auslauföffnung (23) und einer an den Boden (2) anschliessenden Mantelwand (3) mit endständigen, radial nach aussen gerichtetem Flansch (5) und mit einer injektionsseitigen Füllöffnung (4), die mit einer Versiegelungsfolie (7) verschlossen ist, wobei der extraktionsseitige Boden (2) einen lageunveränderlichen peripheren Randbereich (20) aufweist und eine am umlaufenden, ringförmigen Randbereich (20) zentrumsseitig angrenzende umlaufende Gelenkstelle (21), die an eine Bodenplatte (22) anschliesst, welche vor der Benutzung in einer ersten Lage in einer Ebene liegt, die weiter von der Ebene, in der die Versiegelungsfolie (7) an der Füllöffnung (4) liegt, entfernt ist als der lageunveränderliche periphere Randbereich (20), und dass auf oder an der zur Kapselinnenseite hin gerichteten Seite der Bodenplatte (22) Perforationsmittel (24) angeordnet sind, wobei die Bodenplatte (22) von der ersten genannten Lage in eine zweite Lage, die näher der die Füllöffnung versiegelnden Folie (7) bringbar ist, wobei ferner in der Extraktionskapsel (1) eine an der Mantelwand (3) angeformte Konsole (6) vorhanden ist, auf die direkt und/oder mittelbar eine zu perforierende extraktionsseitige Versiegelungsfolie (8) aufliegt, durch die die Perforationsmittel (24) in der zweiten Lage hindurch dringen, **dadurch gekennzeichnet, dass** die Gelenkstelle (21) als ringförmige und U-förmige Rinne mit gegenüber der Bodenplatte (22) und dem Wandbereich (20) verdünnter Wand gestaltet ist.

2. Kapsel nach Anspruch 1, **dadurch gekennzeichnet, dass** die Perforationsmittel (24) direkt auf der Innenseite der Bodenplatte (22) angeformt sind.

3. Kapsel nach Anspruch 1, **dadurch gekennzeichnet, dass** am bodenseitigen Ende der Mantelwand (3) eine umlaufende Konsole (6) angeformt ist, an der der extraktionsseitige Boden (2) angeformt ist, wobei die Konsole (6) eine Ebene definiert, die in der ersten Lage der Bodenplatte (22) vollständig oberhalb der Perforationsmittel (24) liegt.

4. Kapsel nach Anspruch 3, **dadurch gekennzeichnet, dass** auf der Konsole (6) eine damit verbundene extraktionsseitige perforierbare Versiegelungsfolie (8) angebracht ist.

5. Kapsel nach Anspruch 1, **dadurch gekennzeichnet, dass** die Auslauföffnung (23) zentrisch in der Bodenplatte (22) angeordnet ist und ein nach innen ragender Rand die Auslauföffnung (23) begrenzt.

6. Kapsel nach Anspruch 1, **dadurch gekennzeichnet, dass** auf der Bodenplatte (22) eine gesonderte Perforationsplatte (30) aufliegt, an der Perforationsmittel (24) angeformt sind.

7. Kapsel nach Anspruch 5 und 6, **dadurch gekennzeichnet, dass** die Dicke der Perforationsplatte (30) mindestens annähernd der Höhe des nach innen ragenden Randes entspricht, der die Auslauföffnung (23) begrenzt.

8. Kapsel nach Anspruch 1, **dadurch gekennzeichnet, dass** der lagenunveränderliche periphere Randbereich (20) des Bodens mit radial ausgerichteten Versteifungsrippen (52) versehen ist.

9. Extraktionskapsel nach einem der Ansprüche 1 - 8, **dadurch gekennzeichnet, dass** in der Extraktionskapsel (1) eine Einlegekapsel (40) gehalten ist, die einen Injektionsboden (41) aufweist, der mit dem endständigen Flansch (5) der Extraktionskapsel (1) fluchtet, wobei am injektionsseitigen Boden (41) der Einlegekapsel (40) eine konische Mantelwand (42) anschliesst, der ein endständiger Flansch (45) angeformt ist, auf der eine Versiegelungsfolie (44) angebracht ist, die die Einfüllöffnung der Einlegekapsel (40) extraktionsseitig verschliesst, und dass die Einlegekapsel (40) auf der Konsole (6) der Extraktionskapsel (1) aufliegt und die Einlegekapsel (40) durch die Versiegelungsfolie (7) der Extraktionskapsel (1), die auch mit dem injektionsseitigen Boden (41) der Einlegekapsel (40) verbunden ist, in Position gehalten ist.

10. Extraktionskapsel nach Anspruch 9, **dadurch gekennzeichnet, dass** die die Einlegekapsel (40) extraktionsseitig schliessende Versiegelungsfolie (44) direkt auf der Konsole (6) aufliegt.

11. Extraktionskapsel nach den Ansprüchen 2 und 7, **dadurch gekennzeichnet, dass** in den Versteifungsrippen (52) auf gleicher Höhe je eine Stufe eingeformt ist, wobei die Stufen gemeinsam eine Konsole (6) definieren, auf der die Einlegekapsel (40) zentriert aufliegt.

12. Extraktionskapsel nach Anspruch 10, **dadurch gekennzeichnet, dass** die Stufen in den Versteifungsrippen (52) der Extraktionskapsel (1) radial näher zur Auslauföffnung (23) im Extraktionsboden der Extraktionskapsel (1) liegen, als die umlaufende Konsole (6) am Ende der Mantelwand (3), so dass bei eingesetzter Einlegekapsel (40) zwischen der Mantelwand (3) der Extraktionskapsel (1) und den Rippen Durchströmungsöffnungen (53) verbleiben.

13. Extraktionskapsel nach Anspruch 8, **dadurch gekennzeichnet, dass** zwischen den Mantelwänden (3, 42) der Extraktionskapsel (1) und der Einlegekapsel (40) ein befüllbarer ringförmiger Trog (60) verbleibt.

14. Extraktionskapsel nach Anspruch 8, **dadurch gekennzeichnet, dass** im Flansch (45) der Einlegekapsel (1) Durchbrüche (47) eingeformt sind, die durch die Versiegelungsfolie (44) am extraktionsseitigen Flansch (45) verschlossen sind.

15. Extraktionskapsel nach Anspruch 13, **dadurch gekennzeichnet, dass** an der Perforationsplatte (30) Dorne (34) angebracht sind, die auf die Durchbrüche (47) im Flansch (45) der Einlegekapsel (40) gerichtet sind.

## Claims

1. An extraction capsule (1), which contains a substance for preparing a liquid food, comprising an extraction-side bottom (2) with an outlet opening (23) and a lateral wall (3) that adjoins the bottom (2) and has a terminal flange (5) aligned radially outward, and comprising an injection-side filling opening (4), which is closed by a sealing film (7), wherein the extraction-side bottom (2) has a stationary peripheral edge area (20), and a circumferential joint point (21) that circumferentially borders the annular edge area (20) on the center side and adjoins a bottom plate (22), which prior to use lies in a first position in a plane which is farther away from the plane in which the sealing film (7) lies on the filling opening (4) than the stationary, peripheral edge area (20), and that perforation means (24) are arranged on or at the side of the bottom plate (22) directed toward the interior side of the capsule, wherein the bottom plate (22) can be moved from the first mentioned position into a second position closer to the film (7) that closes the filling opening, wherein the extraction capsule (1) incorporates a console (6) molded onto the lateral wall (3), which further directly and/or indirectly carries an extraction-side sealing film (8) to be perforated, and is penetrated by the perforation means (24) in the second position, **characterized in that** the joint point (21) is designed as an annular and U-shaped channel with a thinned wall by comparison to the bottom plate (22) and wall area (20) .

2. The capsule according to claim 1, **characterized in that** the perforation means (24) are molded directly onto the inner side of the bottom plate (22).

3. The capsule according to claim 1, **characterized in that** the bottom-side end of the lateral wall (3) has molded onto it a circumferential console (6), onto which the extraction-side bottom (2) is molded, wherein the console (6) defines a plane which in the first position of the bottom plate (22) lies completely above the perforation means (24) .

4. The capsule according to claim 3, **characterized in that** an extraction-side, perforable sealing film (8) connected with the console (6) is applied thereto.

5. The capsule according to claim 1, **characterized in that** the outlet opening (23) is arranged centrally on the bottom plate (22), and an inwardly protruding edge borders the outlet opening (23).

6. The capsule according to claim 1, **characterized in that** a separate perforation plate (30) lies on the bottom plate (22), and has molded onto it the perforation means (24).

7. The capsule according to claim 5 and 6, **characterized in that** the thickness of the perforation plate (30) at least approximately corresponds to the height of the inwardly protruding edge that borders the outlet opening (23) .

8. The capsule according to claim 1, **characterized in that** the stationary, peripheral edge area (20) of the bottom is provided with radially aligned stiffening ribs (52).

9. The extraction capsule according to one of claims 1 - 8, **characterized in that** an insertion capsule (40) is held in the extraction capsule (1), and has an injection bottom (41) that aligns flush with the terminal flange (5) of the extraction capsule (1), wherein the injection-side bottom (41) of the insertion capsule (40) is adjoined by a conical lateral wall (42), on which is molded a terminal flange (45) to which a sealing film (44) is applied that closes the filling opening of the insertion capsule (40) on the extraction side, and that the insertion capsule (40) lies on the console (6) of the extraction capsule (1), and the insertion capsule (40) is held in position by the sealing film (7) of the extraction capsule (1), which is also connected with the injection-side bottom (41) of the insertion capsule (40).

10. The extraction capsule according to claim 9, **characterized in that** the sealing film (44) that closes the insertion capsule (40) on the extraction side lies directly on the console (6).

11. The extraction capsule according to claims 2 and 7, **characterized in that** a step is molded in each of the stiffening ribs (52) at the same height, wherein the steps together define a console (6) on which lies the centered insertion capsule (40).

12. The extraction capsule according to claim 10, **characterized in that** the steps in the stiffening ribs (52) of the extraction capsule (1) lie radially closer to the outlet opening (23) in the extraction bottom of the extraction capsule (1) than the circumferential console (6) at the end of the lateral wall (3), so that flow-through openings (53) remain between the lateral wall (3) of the extraction capsule (1) and the ribs with the insertion capsule (40) inserted.

13. The extraction capsule according to claim 8, **characterized in that** a fillable, annular trough (60) remains between the lateral walls (3, 42) of the extraction capsule (1) and the insertion capsule (40).

14. The extraction capsule according to claim 8, **characterized in that** passages (47) are formed in the flange (45) of the insertion capsule (1), which are closed by the sealing film (44) on the extraction-side flange (45).

15. The extraction capsule according to claim 13, **characterized in that** awls (34) are secured to the perforation plate (30), which are directed toward the passages (47) in the flange (45) of the insertion capsule (40).

## Revendications

1. Capsule d'extraction (1), qui contient une substance pour la préparation d'une denrée alimentaire liquide, avec un fond côté extraction (2) avec un orifice de sortie (23) et une paroi d'enveloppe (3) se raccordant au fond (2) avec une bride (5) terminale, dirigée radialement vers l'extérieur et avec un orifice de remplissage (4) du côté injection, qui est fermé avec une feuille de scellement (7), sachant que le fond (2) côté extraction comporte une zone de bordure (20) périphérique de position inchangeable et un point d'articulation (21) périphérique adjacent au centre sur la zone de bordure (20) périphérique, de forme annulaire, qui se raccorde à une plaque de fond (22), laquelle se situe avant l'utilisation dans une première position dans un plan, qui est plus éloigné du plan dans lequel se situe la feuille de scellement (7) sur l'orifice de remplissage (4) que la zone de bordure (20) périphérique de position inchangeable et que des moyens de perforation (24) sont disposés sur ou près du côté de plaque de fond (22), dirigé vers le côté intérieur de capsule, sachant que la plaque de fond (22) peut être mise de la première position citée dans une deuxième position, qui est plus près de la feuille (7) scellant l'orifice de remplissage, sachant en outre que dans la capsule d'extraction (1) il y a une console (6) conformée sur la paroi d'enveloppe (3) sur laquelle repose directement et/ou indirectement une feuille de scellement (8) à perforer côté extraction, à travers laquelle pénètrent les moyens de perforation (24) dans la deuxième position, **caractérisée en ce que** le point d'articulation (21) est structuré comme un conduit de forme annulaire et en forme de U avec une paroi amincie par rapport à la plaque de fond (22) et à la zone de paroi (20) .

2. Capsule selon la revendication 1, **caractérisée en ce que** les moyens de perforation (24) sont directement conformés sur le côté intérieur de la plaque de fond (22).

3. Capsule selon la revendication 1, **caractérisée en ce qu'**à l'extrémité côté fond de la paroi d'enveloppe (3) est conformée une console périphérique (6) sur laquelle est conformé le fond (2) côté extraction, sachant que la console (6) définit un plan qui se situe complètement au-dessus des moyens de perforation (24) dans la première position de la plaque de fond (22).

4. Capsule selon la revendication 3, **caractérisée en ce que** sur la console (6) est appliquée une feuille de scellement (8) perforable côté extraction reliée à celle-ci.

5. Capsule selon la revendication 1, **caractérisée en ce que** l'orifice de sortie (23) est disposé au centre dans la plaque de fond (22) et un bord faisant saillie vers l'intérieur limite l'orifice de sortie (23).

6. Capsule selon la revendication 1, **caractérisée en ce que** sur la plaque de fond (22) repose une plaque de perforation séparée (30) sur laquelle sont conformés des moyens de perforation (24).

7. Capsule selon la revendication 5 et 6, **caractérisée en ce que** l'épaisseur de la plaque de perforation (30) correspond à peu près à la hauteur du bord faisant saillie vers l'intérieur, qui limite l'orifice de sortie (23).

8. Capsule selon la revendication 1, **caractérisée en ce que** la zone de bordure (20) périphérique de position inchangeable du fond est dotée de nervures de renfort (52) orientées dans le sens radial.

9. Capsule d'extraction selon l'une quelconque des revendications 1-8, **caractérisée en ce qu'**une capsule d'insertion (40) est maintenue dans la capsule d'extraction (1), qui comporte un fond d'injection (41), qui est aligné avec la bride (5) terminale de la capsule d'extraction (1), sachant qu'au fond côté injection (41) de la capsule d'insertion (40) se raccorde une paroi d'enveloppe conique (42) à laquelle est conformée une bride terminale (45) sur laquelle est montée une feuille de scellement (44), qui ferme du côté extraction l'orifice de remplissage de la capsule d'insertion (40) et **en ce que** la capsule d'insertion (40) repose sur la console (6) de la capsule d'extraction (1) et la capsule d'insertion (40), qui est également reliée au fond côté injection (41) de la capsule d'insertion (40) est maintenue en position par la feuille de scellement (7) de la capsule d'extraction (1).

10. Capsule d'extraction selon la revendication 9, **caractérisée en ce que** la feuille de scellement (44) fermant côté extraction la capsule d'insertion (40) repose directement sur la console (6).

11. Capsule d'extraction selon les revendications 2 et 7, **caractérisée en ce qu'**un gradin est respectivement conformé dans les nervures de renfort (52) à la même hauteur, sachant que les gradins définissent en commun une console (6) sur laquelle repose de façon centrée la capsule d'insertion (40).

12. Capsule d'extraction selon la revendication 10, **caractérisée en ce que** les gradins dans les nervures de renfort (52) de la capsule d'extraction (1) se situent radialement plus près de l'orifice de sortie (23) dans le fond d'extraction de la capsule d'extraction (1) que la console périphérique (6) à l'extrémité de la paroi d'enveloppe (3) de telle manière qu'une fois la capsule d'insertion (40) insérée les orifices d'écoulement (53) restent entre la paroi d'enveloppe (3) de la capsule d'extraction (1) et les nervures.

13. Capsule d'extraction selon la revendication 8, **caractérisée en ce qu'**un godet (60) de forme annulaire pouvant être rempli reste entre les parois d'enveloppe (3, 42) de la capsule d'extraction (1) et la capsule d'insertion (40).

14. Capsule d'extraction selon la revendication 8, **caractérisée en ce que** dans la bride (45) de la capsule d'insertion (1) des percées (47) sont conformées, qui sont fermées sur la bride (45) côté extraction par la feuille de scellement (44).

15. Capsule d'extraction selon la revendication 13, **caractérisée en ce que** des broches (34) sont disposées sur la plaque de perforation (30), qui sont dirigées sur les perçages (47) dans la bride (45) de la capsule d'insertion (40).
